# EUROPEAN PATENT SPECIFICATION

(11) **EP 3 502 575 B1**
(45) Date of publication and mention of the grant of the patent: **09.09.2020**
(21) Application number: 18397538.2
(22) Date of filing: 28.12.2018
(51) Int. Cl.: F24D 10/00

(54) **BUILDING HEATING SYSTEM AND CONNECTION METHOD**
GEBÄUDEHEIZSYSTEM UND VERBINDUNGSVERFAHREN
SYSTÈME DE CHAUFFAGE DE CONSTRUCTION ET PROCÉDÉ DE CONNEXION

(30) Priority: 22.12.2017 FI 20176147
(43) Date of publication of application: 26.06.2019
(73) Proprietor: IOTOI Oy, 06100 Porvoo (FI)
(72) Inventor: ANDERSSON, Tomas, 06200 Porvoo (FI); SÖDERHOLM, Johan, 06100 Porvoo (FI); STARCK, Niklas, 07900 Loviisa (FI)
(74) Representative: Laine IP Oy

(56) References cited:
- DE-A1-102008 057 908
- FR-A1- 3 012 873
- US-B2- 9 835 385

## Description

### TECHNICAL FIELD

The present invention relates to property heating systems utilizing district heating.

### BACKGROUND

District heating is the most common heating method in Finland that heats all types of properties energy-efficiently and reliably. District heating is supplied to customers through a district heating network with a supply line, inlet and a return side, i.e. the reverse side. The heated sight, like a property, is attached to the inlet and return side of the heating network in the property's heat distribution center. In the heat distribution center the heat from the water of the district heating network's outlet is transferred through heat exchangers to the property's heat distribution units such as radiators, floor heating networks or air conditioning and hot tap water. The cooled water from the heat exchangers returns back to the production plant through the return side to be heated again. The district heating water does not circulate in the property's heating network. Based on observations in Porvoo in the winter and summer of 2016 the temperature of the water in the district heating network line outlet can vary between 115 to 80 °C and in the return side between 62,8 to 41 °C.

The high temperature in the return side leads to a poor efficiency in district heating production. When using bio power plants in district heating production the high water temperature in the return side weakens the efficiency and therefore increases the fuel costs. The efficiency rate / power of the flue gas scrubber increases when the return is cooler.

Property heating systems that utilize district heating have been described previously in US Patent 9835383 which discloses the preamble of claim 1 and 10, French Patent 3012873 and German Patent 102008057908.

### SUMMARY OF INVENTION

The invention is characterized by what is stated in the characterizing part of the independent claim.

Due to the invention, it is possible to extend the district heating's heat usage area of the district heating network, because the heat energy of both inlet line and the return side can be used for heating. In this way, possible overheating of the return side can be utilized. The invention is suitable for use in a wide variety of heating applications, such as properties which may be new or renovated.

Utilizing the heat from the return side for heating the property also benefits the district heat producers with better fuel efficiency when the return water is cooler without any technical changes to the power plants. When using bioenergy plants for district heating production, the invention enables savings in fuel consumption as the efficiency of flue gas scrubbers increases as the return side is cooler

Compared to the current procedure, the entire networks usable heating range is raised with the above mentioned benefits with minor changes at the user end. The new method can be introduced in new and renovation projects where a new type and possibly cheaper form of heating is desired. Selling excess heat to and from the the return side of the district heating network would benefit energy companies and users/producers.

### BRIEF DESCRIPTION OF DRAWINGS

In the following, some embodiments of the invention will be described in more detail with reference to the accompanying drawings, in which:
Figure 1 illustrates a heating system according to one embodiment;
Figure 2 shows an example of a switching circuit diagram of a distribution center in a heating system according to one embodiment; and
Figure 3 illustrates an example of a switching diagram in a distribution center in which an existing distribution center has been upgraded to heating system according to one embodiment.

### EMBODIMENTS

The invention is based on the introduction of two return sides and one inlet from a district heating network to a heated site, such as a property. One of the return lines is used for taking district heating water to the heated site and the other for returning the cooled district heating water to the district heating network. Pipes on the return side are separated by a distance from each other to prevent mixing. In this way, the heat energy of both the return line and the inlet line can be used for the heating needs of the property.

In this context, the expression inlet line and return line refer to the pipes or lines on the supply side and on the return side, which are suitable for transferring water or other suitable liquid for transferring heat energy for transferring heat bound to the liquid between the heat production plant and the property or other site to be heated. Water or other liquid is transferred from the production plant to the site to be heated, where the liquid cools. The cooled liquid is transferred back to the production plant in the return line. The property may be a building, such as a house or other building with heated volume and hot water. The property is heated by one or more heating devices. Thus, heating the property serves to keep the volume of the property at the desired temperature for maintenance and use of the property, such as housing. Hot water is heated by the district heating networks inlet side through a heat exchanger from where it is transferred to the hot water network of the property. The hot water in the property's hot water network is typically at least 50 - 55 °C, but the temperature can be higher. From the hot water heating system, the water coming to the property's hot water network is generally much higher, for example 65 °C, in order to achieve the aforementioned minimum temperature in the hot water network.

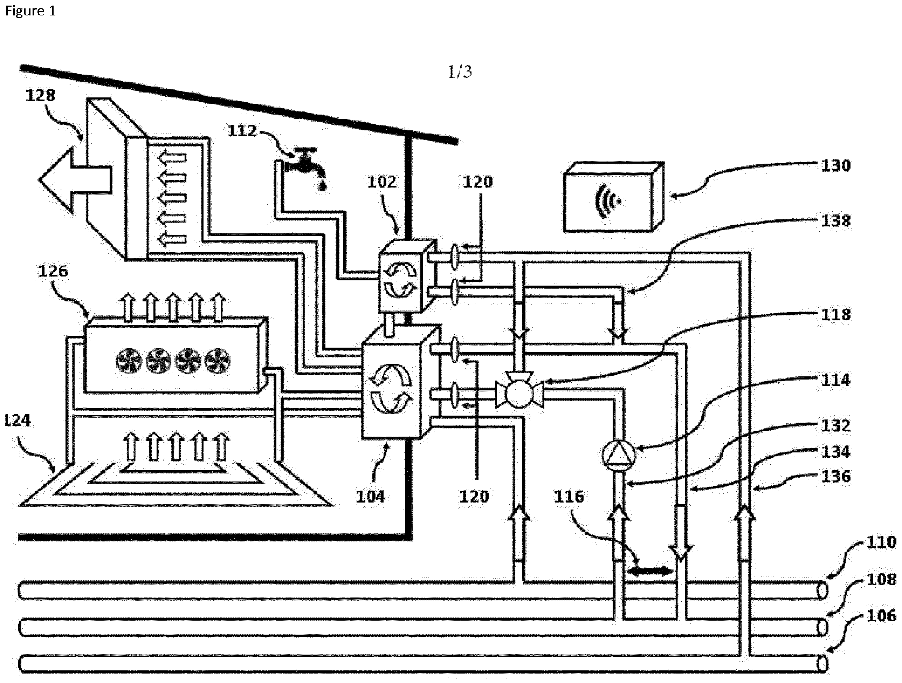

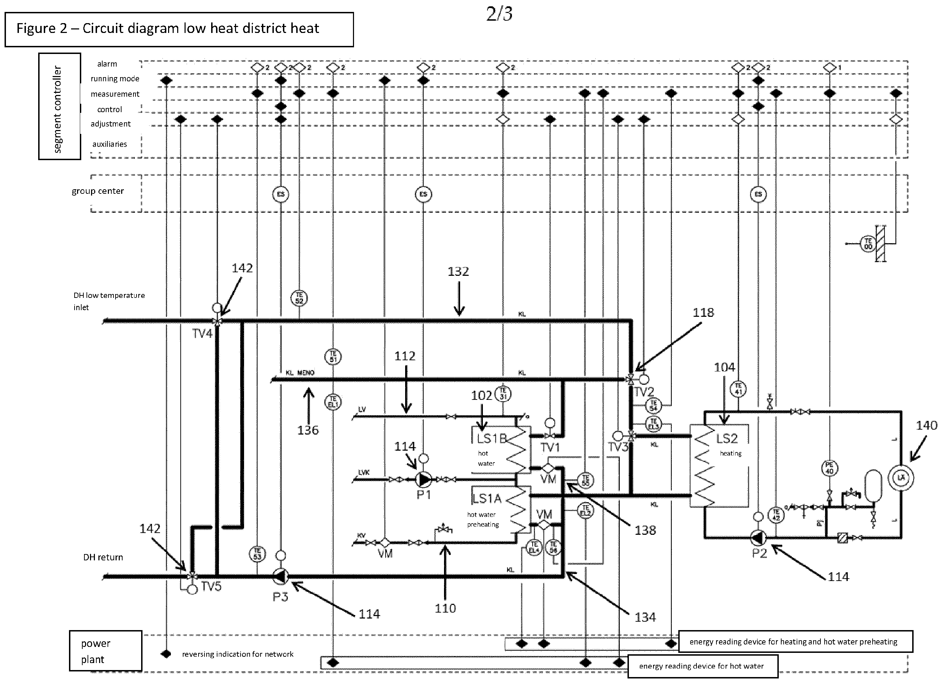

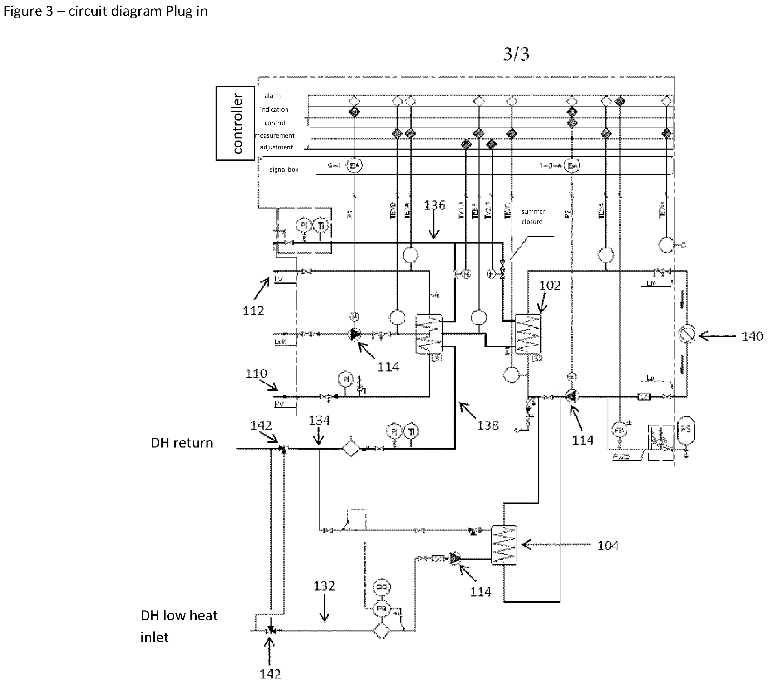

Figure 1 illustrates a heating system according to one embodiment, Figure 2 shows an example of a switching circuit diagram of a distribution center in a heating system according to one embodiment and Figure 3 illustrates an example of a switching diagram in a distribution center in which an existing distribution center has been upgraded to heating system according to one embodiment. In other words in the solution of Figure 3, the existing distribution center is updated with the necessary parts and is a so-called plug-in solution. In the following, embodiments of the invention will be described with reference to Figures 1, 2 and 3, in which the same reference numerals are used to refer to the same or similar objects. In Figure 1, the flow directions of the district heating water are illustrated by arrows. The heating system may be a heating system for a property or other heated site. The heating system may comprise a high temperature section 102 for heating hot tap water 112 and a low temperature section 104 for heating the property. The high temperature section 102 of the heating system is connected to the district heating network supply 106. The inlet 132 of the low temperature section 104 is coupled via a circulating pump 114 to the return line 108. The return of the low heat section 104 is connected to the return line 108 of the district heat network at a distance 116 from the inlet 132 of the low temperature section 104.

In one embodiment, supply of the high temperature section 136 and inlet of the low temperature section 132 are connected, as a back-up, to run the district heating water to the low temperature section 104. In order to prevent the lower limit of the low temperature section 104 from falling, the high temperature section and the low temperature section can be connected by valves 118, such a leveling valves and/or mixing valves.

In one embodiment, the amount of district heating water to be fed from the high temperature section to the low temperature section is controlled by the temperature of the low temperature section 104 inlet 132. If the temperature of the inlet 132 of the low temperature section 104 is below for example 38 °C, the amount of district heating water to be fed from the high temperature section to the low temperature section is increased. If the temperature of the inlet 132 of the low temperature section 104 is higher than for example 38 °C, the amount of district heating water to be fed from the high temperature section 102 is reduced. The temperature of the inlet 132 of the low temperature section 104 can be measured by a temperature sensor mounted to measure the temperature at the inlet 132 of the low temperature section 104. Alternatively, another temperature may be set as the threshold temperature instead of the above 38 °C.

In one embodiment, the low temperature section 104 preheats the hot water 110 of the property, and the preheated hot water is heated to its final temperature in the high temperature section. Thus, sufficient heating water for hot tap water 112 can be secured throughout the year. The energy from the return line can be inadequate for heating water alone.

In one embodiment, the return 138 of the high temperature section 102 is connected through the return 134 of the low temperature section 104 to the return 108 of the district heating network. Thus, both the high temperature section 102 and the low temperature section 104 require only one return 134.

In one embodiment, the low heat section 104 comprises a heat exchanger for transferring heat from the water from the district heat return line to one or more heating devices of the property.

In one embodiment, the property heating equipment comprises a floor heating system 124, a liquid-circulation radiator system 126, a liquid-circulation ventilation heating cell/radiator system 128.

In one embodiment, the high temperature section 102 comprises a heat exchanger to transfer heat from the water from the district heating network supply 106 to the hot tap water 112 of the property.

In one embodiment, the low temperature section 104 inlet 132, high-temperature section 102 inlet 136, low temperature section 104 return 134, and high temperature section 102 return 138 are connected to measuring devices 120 for measuring energy consumption, and the heating system comprises one energy reading device 130 for the low temperature section 104 and the high temperature section 102 or separate energy reading devices for the low temperature 104 and high temperature sections 102.

In one embodiment, a method of heating a property, the method comprising:
- heating the property with the water received from the return heat line 108;
- heating the hot tap water 112 with the water received from the inlet of the district heating network 106;
- water received from the district heat outlet line 106 and return line 108 is fed to the district heating return line 108 at a distance 116 from the low temperature section 104 inlet 132.

In the example according to one embodiment of the implementation of the invention two pipes are brought to the district heating network's return side, low temperature section inlet 132 and combined return 134, and one pipe to the inlet side of the district heating network, high temperature inlet 136. One of the return side of the pipes forms the heated site's, such as a house's, low-flow for heating the property and preheating the property's tap water 112. The hot tap water 112 of the property can be preheated or heated at low cost to maximize the cooling of the district heating water if the low-flow temperature is high enough for hot water heating. In addition, district heat from the inlet side can be used to heat warm water 112 as needed and / or to compensate for low-flow as a backup. The return pipes are connected to the backbone of the heat network at a certain distance from each other so that they are spaced 116 apart and are not mixed. The return fluid is circulated through the site / property with its own circulation pump.

In the implementation, the heated site is equipped with heating devices, which may comprise one or more of the following: heating radiator, 35 - 40 °C, low temperature radiator 35 - 40 °C, or floor heating. The implementation thus enables a complete low heat system to the heated site.

In the implementation, the too low low-flow temperature per connection is increased if necessary by valve 118, for example by leveling/mixing valve, which acts as a security for the low heat system of the property, meaning that the low-flow being too cool to maintain the site's low heat system.

In the implementation, the low-flow is connected via the circulation pump 114 to the return heat line. Low-flow heat and heat from the inlet are measured with measuring devices/sensors 120 readable by a power unit, e.g., MWh or kWh. With the heating system of the property, the district heat from the low-flow and on the inlet side of the district heat can be used to heat the property and hot tap water. The heating system may comprise a low heat section 104 for heating the property and a high temperature section 102 for heating hot tap water 112. The low temperature section 104 may be connected to the high temperature section 102 so that the preheating of the hot tap water 112 takes place in the low temperature section 104 with the heat being transferred and the final heating to the target temperature of the hot tap water is carried out by the heat being transferred in the high temperature section 102. In this way, in the combined low temperature section 104 and the high temperature section 102, the preheated hot water is passed from the low temperature section 104 to the high temperature section 102.

In one embodiment, in the heating system of the property, the combined return 134 of the low temperature section 104 and the high temperature section 102 is connected to the heat return line 108 within a distance 116 of the district heat from the inlet 132 of the low temperature section 104, and the inlet 136 of the high temperature section 102 and the inlet 132 of the low temperature section are connected to run the district heating water from the high temperature section 102 to the low temperature section 104. The low temperature section 104 is connected to the return heat line 108 of the district heating via the reversing valve 142. The reversing valves change direction when the flow direction of the (district heating network) return line 108 changes. Firstly, the flows of the reversing valves 142 can be set so that the water from the return heat line 108, "DH LOW TEMPERATURE INLET", can receive water for heating the property at low temperature section 104, and the water can return to the district heat return line, "DH RETURN", via the combined return 134. In this case, "DH RETURN" is downstream of the return line of the district heating line "DH LOW TEMPERATURE INLET". Alternatively, the flows of the reversing valves 142 can be set so that water from the return heat line 108, "DH RETURN", can receive water to the low temperature section 104 and the water can return to the district heat return line, "DH LOW TEMPERATURE INLET", via the combined return 134. In this case, "DH LOW TEMPERATURE INLET" is in the downstream flow direction of the district heating return "DH RETURN". This allows the heat to be transferred to the water received through the "DH RETURN" and the "DH LOW TEMPERATURE INLET" and the heat can be transferred to the network by means of the returning water through the "DH LOW TEMPERATURE INLET" and "DH RETURN", when the heat generated by the heat source 140 or by the waste heat source or heating system can be utilized in the district heating network. The reversing valves 142 may act fromindications by the energy company or energy companies as the direction of the network flow changes.

The invention allows the energy of the site to be heated is divided into two parts. Energy consumption can thus be monitored from the low temperature side regarding consumed energy and from the district heat inlet regarding consumed energy. In this way, the energy used for low-flow and the energy used in the high temperature inlet line can also be differentiated in billing. The low-flow and traditional inlet and return data for each heated site can be monitored by measuring devices and be distributed to low-flow and district heat inlet line use.

The site/property heat distribution center is controlled in a conventional style but with different parameters. Also, the district heating pipelines and heat exchanger sizes of the site/property should be taken into account, as well as the flows to be adjusted to the needs of the property, such as the traditional district heating connection.

The energy use of the house/site is divided into two parts. Shared billing consists of the energy used in low-flow and traditional inlet. The low-flow of each site/property as well as the traditional inlet and return data are monitored as before but with shared use.

The implementation brings significant benefits, including: efficiency of the district heating plant increases and emissions are reduced; the energy company does not need to change their principles or equipment or the pipes; the energy company does not need to invest in pump cooling cleaners; the energy company's billing district in district heating expands and cooling costs become revenue; enables a two-way district heat connection, where the heat/waste heat of the property is sold for use in the return line.

### INDUSTRIAL APPLICABILITY

The invention is suitable for use in real estate and other district heating applications.

### REFERENCE SIGNS LIST

- 102: high temperature section
- 104: low temperature section
- 106: district heating network supply
- 108: return line
- 110: tap water
- 112: hot tap water
- 114: circulating pump
- 116: distance
- 118: valve
- 120: measuring devices
- 124: floor heating system
- 126: liquid-circulation radiator system
- 128: liquid-circulation ventilation heating cell/radiator system
- 130: energy reading device
- 132: low temperature inlet
- 134: combined return
- 136: high temperature inlet
- 138: high temperature return
- 140: heat source/heating system (Fig. 2 & 3)
- 142: reversing valve (Fig. 2 & 3)

## Claims

1. Property heating system, comprising a high temperature section (102) for heating hot tap water (112) and a low temperature section (104) for heating the property,
- the high temperature section (102) of the property heating system is connected to a supply (106) of a district heating network;
- the inlet (132) of the low temperature section (104) is connected to a return line (108) of the district heating network via a circulating pump (114), and
- a combined return (134) of the low temperature section (104) and the high temperature section (102) is attached to the return line (108) of the district heating at a distance (116) from the inlet (132) of the low temperature section (104) ;
**characterized in that** an inlet (136) of the high temperature section (102)and the inlet (132) of the low temperature section (104) are connected to run the district heating water from the high temperature section (102) to the low temperature section (104).

2. The heating system according to claim 1, **characterized in that** the amount of district heat water run from the high temperature section (102) to the low temperature section (104) is configured to be controlled by the temperature of the inlet (132) of the low temperature sections (104)

3. The heating system according to claim 1 or 2, **characterized in that** the low temperature section (104) preheats the hot water (110) of the property and the preheated hot water is configured to heat to its final temperature in the high temperature section (102).

4. The heating system according to claim 1, wherein the return (138) of the hot temperature (102) is configured to combine to the return line (108) of the district heating via the return (138) of the low temperature section (104).

5. The heating system according to claim 1, 2, 3 or 4, **characterized in that** the low temperature section (104) comprises a heat exchanger for transferring heat from the water from the district heat return line (108) to one or more heating devices in the property.

6. The heating system according to claim 5, **characterized in that** the heating devices comprise a floor heating system (124), a liquid-circulation radiator system (126) and/or a liquid-circulation ventilation heating cell/radiator system (128).

7. The heating system according to claim 1, 2, 3, 4, 5 or 6, **characterized in that** the high temperature section (102) comprises a heat exchanger for transferring heat from the water of the district heat network supply (106) to the hot tap water (112) of the property.

8. The heating system according to claim 1, 2, 3, 4, 5, 6 or 7, **characterized in that** the inlet (132) of the low temperature section (104), the inlet (136) of the high temperature section (102), the return (134) of the low temperature section (104) and the return (138) of the high temperature section (102) are incorporated with measuring devices (120) for measuring energy consumption, and the heating system comprises an energy reading device (130) shared between the low temperature section (104) and the high temperature section (102) or separate energy reading devices for the low temperature section (104) and the high temperature section (102).

9. The heating system according to claim 1, 2, 3, 4, 5, 6, 7 or 8, **characterized in that** the inlet (132) of the low temperature section and the combined return (134) are connected to the return line (108) of the district heat via reversing valves (142).

10. A method for heating a property, the method comprising:
- receiving water from the supply (106) of the district heating network in the high temperature section (102);
- receiving water from the return line (108) of the district heat in the low temperature section (104);
- combining the water received from the district heat return line (108) and the water received from the district heating network supply (106) into the inlet (132) of the low temperature section (104);
- heating hot tap water (112) with the high temperature section (102) with the water received from the district heating network supply (106);
- supplying water from combined return (134) of the low temperature section (104) and the high temperature section (102) to the return line (108) at a distance (116) from the inlet (132) of the low temperature section (104);
**characterized by** heating the property with the low temperature section (104) with water received from the return line (108) of the district heat, to which the water received from the district heating network supply(106) is mixed.

11. The method according to claim 10, **characterized in that** the excess heat produced in the property or the deliberately produced heat is supplied to the return line (108) of the district heating network via a combined return (134) of a low temperature section (104).

## Patentansprüche

1. Gebäudeheizanlage, die einen Hochtemperaturabschnitt (102) zum Wärmen von Leitungswarmwasser (112) und einen Niedertemperaturabschnitt (104) zum Heizen des Gebäudes umfasst,
- wobei der Hochtemperaturabschnitt (102) der Gebäudeheizanlage mit einer Versorgung (106) eines Fernwärmenetzwerks verbunden ist;
- wobei der Einlass (132) des Niedertemperaturabschnitts (104) mit einer Rücklaufleitung (108) des Fernwärmenetzwerks über eine Umwälzpumpe (114) verbunden ist, und
- eine kombinierte Rückführung (134) des Niedertemperaturabschnitts (104) und des Hochtemperaturabschnitts (102) an der Rücklaufleitung (108) des Fernwärmenetzwerks in einem Abstand (116) von dem Einlass (132) des Niedertemperaturabschnitts (104) angebracht ist;
**dadurch gekennzeichnet, dass** ein Einlass (136) des Hochtemperaturabschnitts (102) und der Einlass (132) des Niedertemperaturabschnitts (104) verbunden sind, um das Fernwärmewasser von dem Hochtemperaturabschnitt (102) zu dem Niedertemperaturabschnitt (104) zu führen.

2. Heizanlage nach Anspruch 1, **dadurch gekennzeichnet, dass** die Menge an Fernwärmewasser, die von dem Hochtemperaturabschnitt (102) zu dem Niedertemperaturabschnitt (104) geführt wird, konfiguriert ist, um von der Temperatur des Einlasses (132) der Niedertemperaturabschnitte (104) gesteuert zu sein.

3. Heizanlage nach Anspruch 1 oder 2, **dadurch gekennzeichnet, dass** der Niedertemperaturabschnitt (104) das Warmwasser (110) des Gebäudes vorwärmt, und das vorgewärmte Warmwasser konfiguriert ist, um in dem Hochtemperaturabschnitt (102) auf seine Endtemperatur erwärmt zu werden.

4. Heizanlage nach Anspruch 1, wobei die Rückführung (138) des Hochtemperaturabschnitts (102) konfiguriert ist, um sich zu der Rücklaufleitung (108) der Fernwärme über die Rückführung (138) des Niedertemperaturabschnitts (104) zu kombinieren.

5. Heizanlage nach Anspruch 1, 2, 3 oder 4, **dadurch gekennzeichnet, dass** der Niedertemperaturabschnitt (104) einen Wärmetauscher zum Übertragen von Wärme von dem Wasser von der Fernwärmerücklaufleitung (108) zu einem oder mehreren Heizgeräten in dem Gebäude umfasst.

6. Heizanlage nach Anspruch 5, **dadurch gekennzeichnet, dass** die Heizgeräte eine Bodenheizanlage (124), ein Flüssigkeitsumwälz-Heizkörpersystem (126) und/oder ein(e) Flüssigkeitsumwälz-Belüftungsheizzelle/Heizkörpersystem (128) umfassen.

7. Heizanlage nach Anspruch 1, 2, 3, 4, 5 oder 6, **dadurch gekennzeichnet, dass** der Hochtemperaturabschnitt (102) einen Wärmetauscher zum Übertragen von Wärme von dem Wasser von der Fernwärmenetzwerkversorgung (106) zu dem Leitungswarmwasser (112) des Gebäudes umfasst.

8. Heizanlage nach Anspruch 1, 2, 3, 4, 5, 6 oder 7, **dadurch gekennzeichnet, dass** der Einlass (132) des Niedertemperaturabschnitts (104), der Einlass (136) des Hochtemperaturabschnitts (102), die Rückführung (134) des Niedertemperaturabschnitts (104) und die Rückführung (138) des Hochtemperaturabschnitts (102) mit Messgeräten (120) für das Messen des Energieverbrauchs versehen sind, und dass die Heizanlage eine Energieablesevorrichtung (130) umfasst, die von dem Niedertemperaturabschnitt (104) und dem Hochtemperaturabschnitt (102) gemeinsam verwendet werden, oder separate Energieablesevorrichtungen für den Niedertemperaturabschnitt (104) und den Hochtemperaturabschnitt (102).

9. Heizanlage nach Anspruch 1, 2, 3, 4, 5, 6, 7 oder 8, **dadurch gekennzeichnet, dass** der Einlass (132) des Niedertemperaturabschnitts und die kombinierte Rückführung (134) mit der Rücklaufleitung (108) der Fernwärme über Umkehrventile (142) verbunden sind.

10. Verfahren zum Heizen eines Gebäudes, wobei das Verfahren Folgendes umfasst:
- Empfangen von Wasser von der Versorgung (106) des Fernwärmenetzwerks in dem Hochtemperaturabschnitt (102);
- Empfangen von Wasser von der Rücklaufleitung (108) der Fernwärme in dem Niedertemperaturabschnitt (104);
- Kombinieren des Wassers, das von der Fernwärmerücklaufleitung (108) empfangen wird, und des Wassers, das von der Fernwärmenetzwerkversorgung (106) empfangen wird, in dem Einlass (132) des Niedertemperaturabschnitts (104);
- Wärmen von Leitungswarmwasser (112) mit dem Hochtemperaturabschnitt (102) mit dem Wasser, das von der Fernwärmenetzwerkversorgung (106) empfangen wird;
- Versorgung mit Wasser von der kombinierten Rückführung (134) des Niedertemperaturabschnitts (104) und des Hochtemperaturabschnitts (102) zu der Rücklaufleitung (108) in einem Abstand (116) von dem Einlass (132) des Niedertemperaturabschnitts (104);
**gekennzeichnet durch** das Heizen des Gebäudes mit dem Niedertemperaturabschnitt (104) mit Wasser, das von der Rücklaufleitung (108) der Fernwärme empfangen wird, zu der das Wasser, das von der Fernwärme Netzwerkversorgung (106) empfangen wird, hinzugemischt wird.

11. Verfahren nach Anspruch 10, **dadurch gekennzeichnet, dass** die überschüssige Wärme, die in dem Gebäude erzeugt wird, oder absichtlich erzeugte Wärme zu der Rücklaufleitung (108) des Fernwärmenetzwerks über eine kombinierte Rückführung (134) eines Niedertemperaturabschnitts (104) geliefert wird.

## Revendications

1. Système de chauffage de construction, comprenant une section haute température (102) pour chauffer l'eau chaude sanitaire (112) et une section basse température (104) pour chauffer la construction,
- la section haute température (102) du système de chauffage de construction est reliée à une alimentation (106) d'un réseau de chauffage urbain ;
- l'entrée (132) de la section basse température (104) est reliée à une conduite de retour (108) du réseau de chauffage urbain via une pompe de circulation (114), et
- un retour combiné (134) de la section basse température (104) et de la section haute température (102) est attaché à la conduite de retour (108) du chauffage urbain à une certaine distance (116) de l'entrée (132) de la section basse température (104) ;
**caractérisé en ce qu'**une entrée (136) de la section haute température (102) et l'entrée (132) de la section basse température (104) sont reliées pour diriger l'eau de chauffage urbain de la section haute température (102) à la section basse température (104).

2. Système de chauffage selon la revendication 1, **caractérisé en ce que** la quantité d'eau de chauffage urbain dirigée de la section haute température (102) à la section basse température (104) est configurée pour être commandée par la température de l'entrée (132) des sections basse température (104).

3. Système de chauffage selon la revendication 1 ou 2, **caractérisé en ce que** la section basse température (104) préchauffe l'eau chaude (110) de la construction et l'eau chaude préchauffée est configurée pour chauffer jusqu'à sa température finale dans la section haute température (102).

4. Système de chauffage selon la revendication 1, dans lequel le retour (138) de la température élevée (102) est configuré pour se combiner à la conduite de retour (108) du chauffage urbain via le retour (138) de la section basse température (104).

5. Système de chauffage selon la revendication 1, 2, 3 ou 4, **caractérisé en ce que** la section basse température (104) comprend un échangeur de chaleur pour transférer la chaleur depuis l'eau provenant de la conduite de retour de chauffage urbain (108) à un ou plusieurs dispositifs de chauffage dans la construction.

6. Système de chauffage selon la revendication 5, **caractérisé en ce que** les dispositifs de chauffage comprennent un système de chauffage par le sol (124), un système de radiateur à circulation de liquide (126) et/ou un système de radiateur/cellule de chauffage à ventilation par circulation de liquide (128).

7. Système de chauffage selon la revendication 1, 2, 3, 4, 5 ou 6, **caractérisé en ce que** la section haute température (102) comprend un échangeur de chaleur pour transférer la chaleur depuis l'eau de l'alimentation de réseau de chauffage urbain (106) à l'eau chaude sanitaire (112) de la construction.

8. Système de chauffage selon la revendication 1, 2, 3, 4, 5, 6 ou 7, **caractérisé en ce que** l'entrée (132) de la section basse température (104), l'entrée (136) de la section haute température (102), le retour (134) de la section basse température (104) et le retour (138) de la section haute température (102) sont équipés de dispositifs de mesure (120) pour mesurer la consommation d'énergie, et le système de chauffage comprend un dispositif de lecture d'énergie (130) partagé entre la section basse température (104) et la section haute température (102) ou de dispositifs de lecture d'énergie distincts pour la section basse température (104) et la section haute température (102).

9. Système de chauffage selon la revendication 1, 2, 3, 4, 5, 6, 7 ou 8, **caractérisé en ce que** l'entrée (132) de la section basse de température et le retour combiné (134) sont reliés à la conduite de retour (108) du chauffage urbain via des robinets inverseurs (142).

10. Procédé pour chauffer une construction, le procédé comprenant :
- la réception d'eau en provenance de l'alimentation (106) du réseau de chauffage urbain dans la section haute température (102) ;
- la réception d'eau en provenance de la conduite de retour (108) du chauffage urbain dans la section basse température (104) ;
- la combinaison de l'eau reçue en provenance de la conduite de retour de chauffage urbain (108) et de l'eau reçue en provenance de l'alimentation de réseau de chauffage urbain (106) jusque dans l'entrée (132) de la section basse température (104) ;
- le chauffage de l'eau chaude sanitaire (112) avec la section haute température (102) avec l'eau reçue en provenance de l'alimentation de réseau de chauffage urbain (106) ;
- l'alimentation en eau à partir du retour combiné (134) de la section basse température (104) et de la section haute température (102) à la conduite de retour (108) à une certaine distance (116) en provenance de l'entrée (132) de la section basse température (104) ;
**caractérisé par** le chauffage de la construction avec la section basse température (104) avec l'eau reçue en provenance de la conduite de retour (108) du chauffage urbain, à laquelle l'eau reçue en provenance de l'alimentation de réseau de chauffage urbain (106) est mélangée.

11. Procédé selon la revendication 10, **caractérisé en ce que** la chaleur en excès produite dans la construction ou la chaleur délibérément produite est fournie à la conduite de retour (108) du réseau de chauffage urbain via un retour combiné (134) d'une section basse température (104).
